# EUROPÄISCHE PATENTSCHRIFT

(11) **EP 2 384 818 B1**
(45) Veröffentlichungstag und Bekanntmachung des Hinweises auf die Patenterteilung: **07.08.2019**
(21) Anmeldenummer: 11159412.3
(22) Anmeldetag: 23.03.2011
(51) Int. Cl.: B03C 7/04, B29B 17/02, B29K 27/06, B29K 67/00

(54) **Vorrichtung und Verfahren zum Aussortieren von Feinpartikeln aus einem Partikelgemenge**
Device and method for sorting fine particles out of a particle mixture
Dispositif et procédé de tri de particules fines à partir d'une quantité de particules

(30) Priorität: 04.05.2010 DE 102010028555
(43) Veröffentlichungstag der Anmeldung: 09.11.2011
(73) Patentinhaber: Krones AG, 93073 Neutraubling (DE)
(72) Erfinder: Friedlaender, Thomas, 93049, Regensburg (DE)
(74) Vertreter: Grünecker Patent- und Rechtsanwälte PartG mbB

(56) Entgegenhaltungen:
- CH-A- 64 703
- DD-A7- 4 042
- DE-A1- 1 758 682
- GB-A- 1 107 574
- GB-A- 191 311 852
- US-A- 2 873 048
- US-A- 3 402 814
- US-A- 4 738 772
- US-A- 5 000 203
- US-A- 5 118 407
- US-A1- 2007 084 757
- US-B1- 6 903 294

## Beschreibung

Die vorliegende Erfindung betrifft eine Vorrichtung und ein Verfahren zum Aussortieren von Feinpartikeln aus einem auf einer Oberfläche eines Trägerelements angeordneten Partikelgemenge.

Recycelte PET-Kunststoffflaschen werden in der Getränkeindustrie häufig zur Erzeugung neuer Kunststoffflaschen verwendet. Dazu werden die recycelten Altflaschen zunächst geschreddert und aus dem so gewonnenen Mahlgutstrom werden daraufhin Fremdpartikel, beispielsweise Partikel aus Fremdkunststoffen wie PVC, aussortiert. Die so erhaltenen PET-Partikel oder PET-Flakes werden dann zur Herstellung neuer PET-Flaschen verwendet. Eine Vorrichtung und ein Verfahren zum Recycling von PET-Flaschen sind beispielsweise aus dem Dokument US 6 903 294 B1 bekannt.

Beim Aussortieren können große Fremdstoffpartikel mittels optischer Sorter oder NIR-Sortern (Nahinfrarot-Sorter) abgetrennt werden. Der Mahlgutstrom umfasst üblicherweise jedoch auch kleine Fremdteilchen, welche durch die optischen oder NIR-Sorter nicht erkannt werden. Diese Feinpartikel können bei der Weiterverarbeitung auskristallisieren und so die aus recyceltem Material hergestellten Kunststoffflaschen trüben.

Daher ist es Aufgabe der vorliegenden Erfindung, eine Vorrichtung und ein Verfahren bereitzustellen, welche ein verbessertes Aussortieren von Feinpartikeln aus einem Mahlgutstrom erlauben. Dieses Problem wird durch ein Verfahren gemäß Patentanspruch 1 und eine Vorrichtung gemäß Patentanspruch 5 gelöst.

Bei dem erfindungsgemäßen Verfahren nach Anspruch 1 zum Aussortieren von Feinpartikel aus einem auf einer Oberfläche eines Trägerelements angeordnetem Partikelgemenge, das Partikel unterschiedlicher Größen, insbesondere Feinpartikel mit einem Durchmesser bis 1,00 mm umfasst, werden die Feinpartikel mittels eines elektrostatisch geladenen Separierelements wenigstens teilweise aus dem Partikelgemenge aussortiert.

Dadurch, dass die Feinpartikel sich durch Reibung üblicherweise besonders stark elektrostatisch aufladen, können sie mittels des elektrostatisch geladenen Separierelements auf einfache Weise aus dem Partikelgemenge aussortiert werden.

Das Partikelgemenge kann insbesondere einem Mahlgutstrom entsprechen. Das Partikelgemenge kann unterschiedliche Kunststoffe, beispielsweise PET (Polyethylenterephthalat) oder PVC (Polyvinylchlorid), umfassen. Das Partikelgemenge kann Partikel unterschiedlicher Größen, insbesondere Partikel mit einem maximalen Durchmesser bis 3,00 cm umfassen.

Als Feinpartikel werden hier Partikel des Partikelgemenges bezeichnet, welche einen maximalen Partikeldurchmesser bis 1,00 mm, insbesondere bis 0,50 mm, aufweisen.

Das Separierelement, insbesondere eine Oberfläche des Separierelements, wird mit einer elektrostatischen Ladung versehen, es wird also auf ein vorherbestimmtes Potential oder unter eine vorherbestimmte elektrische Spannung gebracht.

Die Ladung des Separierelements kann dabei so gewählt werden, dass eine anziehende Kraft auf die Feinpartikel des Partikelgemenges wirkt. Mit anderen Worten kann das Separierelement also eine entgegengesetzte Ladung zu der Ladung der Feinpartikel aufweisen.

Die Feinpartikel können durch Reibung untereinander und/oder mit anderen Partikeln des Partikelgemenges eine elektrostatische Ladung aufweisen. Häufig weisen Partikel aus einem bestimmten Material eine vorherbestimmte Ladung auf.

Es können insbesondere zwei elektrostatisch geladene Separierelemente bereitgestellt werden, wobei die zwei Separierelemente eine voneinander unterschiedliche elektrostatische Aufladung, insbesondere eine entgegengesetzte Ladung, aufweisen. Dadurch können sowohl positiv als auch negativ elektrostatisch geladene Feinpartikel aus dem Partikelgemenge aussortiert beziehungsweise ausgelesen werden.

Das Separierelement kann derart ausgebildet sein, dass sich die aus dem Partikelgemenge aussortierten Feinpartikel aufgrund einer elektrostatischen Anziehungskraft auf einer Oberfläche des Separierelements ablagern können.

Der Abstand zwischen dem Separierelement und dem Partikelgemenge und/oder die elektrostatische Ladung des Separierelements sind derart gewählt oder eingestellt, dass Feinpartikel wenigstens teilweise aus dem Partikelgemenge aussortiert werden. Mit anderen Worten werden der Abstand zwischen dem Separierelement und dem Partikelgemenge und/oder die elektrostatische Ladung des Separierelements derart gewählt, dass elektrostatisch geladene Feinpartikel des Partikelgemenges in Richtung des Separierelementes beschleunigt werden.

Das Separierelement befindet sich neben und/oder über dem Partikelgemenge. Insbesondere kann das Verfahren ein Anordnen des Separierelements neben und/oder über dem Partikelgemenge umfassen.

Das Partikelgemenge wird relativ zum Separierelement entlang einer Richtung parallel zur Oberfläche des Trägerelements, auf der das Partikelgemenge angeordnet ist, bewegt. Mit anderen Worten wird das Partikelgemenge unter und/oder neben dem Separierelement vorbeigeführt. Bei dem Trägerelement handelt es sich um ein Fördermedium, beispielsweise ein Förderband. Dadurch können die Feinpartikel direkt aus dem Mahlgutstrom aussortiert werden.

Zusätzlich kann auch das Separierelement bewegt werden. Beispielsweise kann das Separierelement über der Oberfläche des Trägerelements, auf der das Partikelgemenge angeordnet ist, entlang bewegt werden und dabei die Feinpartikel aussortieren.

Zusätzlich kann das Trägerelement derart bewegt werden, dass sich das Partikelgemenge wenigstens teilweise von der Oberfläche des Trägerelements löst. Durch ein derartiges Auflockern und/oder Aufwirbeln können die geladenen Feinpartikel leichter durch die elektrische Kraftwirkung zum Separierelement hinbewegt und auf diesem angelagert werden.

Das Bewegen des Trägerelements kann insbesondere ein Rütteln, Wippen und/oder Schwingen des Trägerelements umfassen. Beispielsweise kann das Trägerelement vibrieren, insbesondere mit einer vorherbestimmten Frequenz.

Das Separierelement kann mittels einer Ladevorrichtung elektrostatisch aufgeladen werden. Insbesondere kann das Separierelement mittels der Ladevorrichtung auf einem vorherbestimmten Potential gehalten werden. Die Ladevorrichtung kann beispielsweise ein Bandgenerator oder Van-de-Graaff-Generator sein.

Am Separierelement anhaftende Feinpartikel werden vom Separierelement entfernt.

Insbesondere können die Feinpartikel abseits des Partikelgemenges entfernt werden. Dadurch ist ein dauerhaftes Befreien des Partikelgemenges von den Feinpartikeln möglich.

Das Separierelement kann insbesondere eine Folie oder eine Folienrolle umfassen. Im Falle einer Folienrolle kann die Folie auf der Folienrolle bewegt werden und abseits des Partikelgemenges von den Feinpartikeln befreit werden.

Die Erfindung stellt außerdem eine Vorrichtung nach Anspruch 5 zum Aussortieren von Feinpartikeln aus einem Partikelgemenge aus einer PET-Recyclinganlage, das Partikel unterschiedlicher Größen, insbesondere Feinpartikel mit einem Durchmesser bis 1,00 mm umfasst, bereit, umfassend ein Trägerelement zum Anordnen des Partikelgemenges auf einer Oberfläche des Trägerelements, und ein elektrostatisch geladenes Separierelement, das derart ausgebildet und/oder angeordnet ist, dass die Feinpartikel mittels des elektrostatisch geladenen Separierelements wenigstens teilweise aus dem Partikelgemenge aussortiert werden können.

Mit einer derartigen Vorrichtung kann ein oben beschriebenes Verfahren zum Aussortieren von Feinpartikeln durchgeführt werden. Insbesondere können das Partikelgemenge, das Trägerelement und/oder das Separierelement eines oder mehrere der oben beschriebenen Merkmale aufweisen.

Das Separierelement ist wenigstens teilweise über und/oder neben der Oberfläche des Trägerelements zum Anordnen des Partikelgemenges angeordnet.

Das Trägerelement kann insbesondere derart bewegbar sein, dass sich durch die Bewegung ein auf der Oberfläche des Trägerelements angeordnetes Partikelgemenge wenigstens teilweise von der Oberfläche löst. Dazu kann die Vorrichtung beispielsweise ein Rüttelelement und/oder ein Wippelement umfassen.

Das Trägerelement und das Separierelement sind relativ zueinander bewegbar. Das Trägerelement umfasst ein Fördermedium, beispielsweise ein Förderband.

Die Vorrichtung kann außerdem eine Ladevorrichtung zum elektrostatischen Aufladen des Separierelements umfassen. Die Ladevorrichtung kann beispielsweise ein Bandgenerator oder Van-de-Graaff-Generator sein.

Das Separierelement kann eine Folie, insbesondere eine Folienrolle, umfassen.

Die Vorrichtung umfasst außerdem ein Reinigungselement, beispielsweise eine Bürste, zum Entfernen von auf dem Separierelement angeordneten Feinpartikeln.

Die oben beschriebene Vorrichtung ist Teil einer Anlage für PET-Recycling.

Weitere Merkmale und Vorteile der Erfindung werden nachfolgend anhand der beispielhaften Figuren erläutert. Dabei zeigt
- Figur 1: eine Seitenansicht einer beispielhaften Vorrichtung zum Aussortieren von Feinpartikeln aus einem Partikelgemenge;
- Figur 2: eine Seitenansicht einer weiteren beispielhaften Vorrichtung zum Aussortieren von Feinpartikeln aus einem Partikelgemenge; und
- Figur 3: eine Seitenansicht einer weiteren beispielhaften Vorrichtung zum Aussortieren von Feinpartikeln aus einem Partikelgemenge.

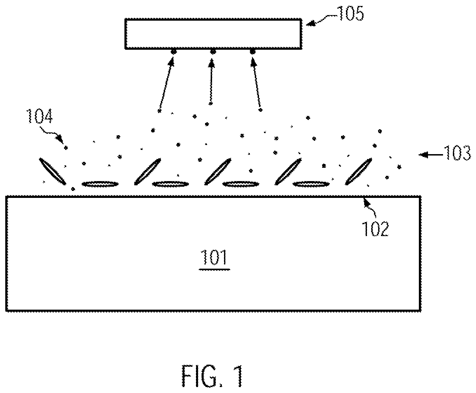

In Figur 1 ist ein beispielhaftes Trägerelement 101 gezeigt, wobei auf einer Oberfläche 102 des Trägerelements 101 ein Partikelgemenge 103 angeordnet ist.

Das Partikelgemenge umfasst Partikel unterschiedlicher Größen, insbesondere Partikel mit einem maximalen Partikeldurchmesser bis zu 3,00 cm. Partikel mit einem maximalen Durchmesser bis 1,00 mm werden dabei als Feinpartikel bezeichnet.

Das Partikelgemenge 103 umfasst Partikel aus PET sowie Feinpartikel 104 aus Fremdkunststoffen, wie etwa PVC.

Die Feinpartikel 104 weisen üblicherweise eine durch Reibung bedingte starke elektrostatische Aufladung auf. Die Reibung kann dabei Reibung innerhalb des Partikelgemenges sein und/oder Reibung mit Behandlungseinrichtungen zum Bearbeiten und/oder Transportieren des Partikelgemenges.

Mittels eines elektrostatisch geladenen Separierelements 105 können daher die Feinpartikel 104 wenigstens teilweise aus dem Partikelgemenge 103 aussortiert werden. Insbesondere kann das Separierelement 105 derart ausgebildet und/oder angeordnet werden, dass Feinpartikel 104 durch eine elektrische Kraftwirkung zum Separierelement 105 hin beschleunigt werden und sich auf einer Oberfläche des Separierelements 105 anlagern. Das Separierelement 105 kann daraufhin langsam weiterbewegt werden und abseits des Partikelgemenges 103 von den Feinpartikeln 104 befreit werden.

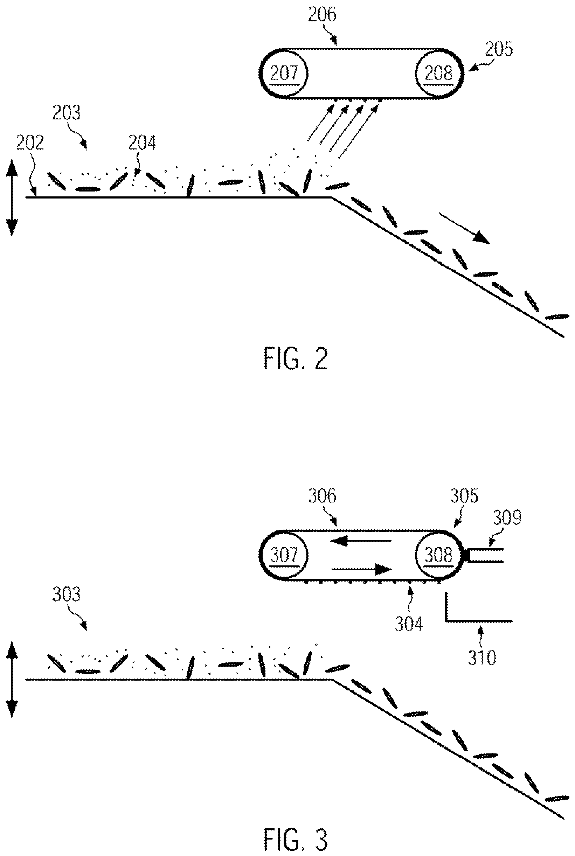

Figur 2 zeigt eine weitere beispielhafte Vorrichtung zum Aussortieren von Feinpartikeln 204 aus einem auf einer Oberfläche 202 eines Trägerelements angeordneten Partikelgemenges 203. Das Trägerelement entspricht in diesem Fall einem Förderelement, beispielsweise einem Förderband oder einer Vibrations-Förderrinne. Durch dieses Förderelement wird das Partikelgemenge 203 unter einem Separierelement 205 vorbei bewegt.

Außerdem wird das Förderelement senkrecht zur Oberfläche 202 ausgelenkt, wie durch den doppelseitigen Pfeil in der Figur 2 angedeutet. Durch diese Vibration des Trägerelements wird das Partikelgemenge 203 aufgewirbelt, also wenigstens teilweise von der Oberfläche 202 gelöst. Durch die geringere Masse der Feinpartikel 204 werden diese stärker aufgewirbelt, also stärker von der Oberfläche 202 gelöst. Insbesondere erhöht sich damit die mittlere Distanz der Feinpartikel 204 von der Oberfläche 202 und von benachbarten Partikeln des Partikelgemenges 203. Dadurch können die Feinpartikel 204 leichter am Separierelement 205 angeordnet werden.

Durch die elektrische Anziehungskraft, welche durch das elektrostatisch geladene Separierelement 205 auf die elektrostatisch geladenen Feinpartikel 204 wirkt, werden diese auf eine Oberfläche des Separierelements 205 bewegt und dort angelagert. Die Bewegung der Feinpartikel 204 ist durch einige beispielhafte Pfeile in Figur 2 illustriert.

In der Figur 2 handelt es sich bei dem Separierelement 205 um eine Folienrolle. Diese umfasst eine elektrostatisch geladene, also unter eine elektrische Spannung gebrachte, Folie 206, welche über Umlenkrollen 207 beziehungsweise 208 bewegt werden kann.

Das beispielhafte Partikelgemenge in Figur 2 entspricht einem Mahlgutstrom einer PET-Recyclinganlage. Der von den Feinpartikeln 204 weitestgehend befreite Mahlgutstrom wird in der Figur 2 auf einer schiefen Ebene abtransportiert und steht zur weiteren Bearbeitung zur Verfügung. Die auf der Folie 206 angeordneten Feinpartikel 204 können von der Folie 206 entfernt und daraufhin entsorgt werden.

Figur 3 zeigt eine beispielhaft Vorrichtung zum Aussortieren von Feinpartikeln aus einem auf einer Oberfläche eines Trägerelements angeordneten Partikelgemenges 303. Die Vorrichtung entspricht im Wesentlichen der in Figur 2 gezeigten Vorrichtung. Außerdem umfasst die Vorrichtung der Figur 3 ein Reinigungselement 309, beispielsweise eine Bürste.

Die Folie 306 des Separierelements 305 kann durch die Umlenkrollen 307 beziehungsweise 308 bewegt werden. In diesem Beispiel ist eine Bewegung gegen den Uhrzeigersinn durch zwei Pfeile angedeutet. Die Folie 306 kann also langsam weiterbewegt werden und durch das Reinigungselement 309 von den Feinpartikeln 304 befreit werden. Die von der Folie 306 entfernten Feinpartikel 304 können in einem Auffangelement 310 aufgefangen und einer Entsorgung zugeführt werden. Die von den Feinpartikeln 304 gereinigte Folie 306 wird nach dem Reinigungselement 309 weiterbewegt, bis es wenigstens teilweise über dem Partikelgemenge 303 angeordnet ist und neue Feinpartikeln 304 anziehen und anlagern kann.

Die beispielhafte Vorrichtung kann außerdem eine Ladevorrichtung, beispielsweise einen Bandgenerator umfassen, welcher die Folie 306 des Separierelements 305 elektrostatisch auflädt, also unter eine Spannung setzt.

In diesem Beispiel wird das Partikelgemenge 303 auf einem Förderelement relativ zum Separierelement 305 bewegt. Alternativ oder zusätzlich kann auch das Separierelement 305 bewegt werden.

Die oben genannten beispielhaften Vorrichtungen können Teil einer Recyclinganlage für PET-Flaschen sein. Eine solche Anlage kann außerdem optische Sorter und/oder NIR-Sorter (Nahinfrarot-Sorter) zum Aussortieren von großen Fremdstoffpartikeln umfassen.

Die oben beschriebenen Vorrichtungen können auch mehrere Separierelemente, insbesondere zwei Separierelemente, aufweisen. Die zwei Separierelemente können insbesondere eine entgegengesetzte Ladung aufweisen. Dadurch können Feinpartikel mit unterschiedlicher Ladung aus dem Partikelgemenge aussortiert werden.

Die zwei Separierelemente können vollständig oder teilweise nebeneinander und/oder hintereinander angeordnet sein.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind, wobei die Erfindung einzig durch die nachfolgend aufgeführten Ansprüche festgelegt ist.

## Patentansprüche

1. Verfahren zum Aussortieren von Feinpartikeln (104, 204, 304) aus einem auf einer Oberfläche (102, 202) eines Trägerelementes (101) angeordneten Partikelgemenge (103, 203, 303) einer PET-Recyclinganlage, das Partikel unterschiedlicher Größen, insbesondere Feinpartikel mit einem Durchmesser bis 1 mm, umfasst, wobei die Feinpartikel (104, 204, 304) mittels eines elektrostatisch geladenen Separierelements (105, 205, 305) wenigstens teilweise aus dem Partikelgemenge (103, 203, 303) aussortiert werden;
wobei sich das Separierelement (105, 205, 305) neben und/oder über dem Partikelgemenge (103, 203, 303) befindet;
wobei das Trägerelement (101) ein Fördermedium ist, sodass das Partikelgemenge (103, 203, 303) relativ zum Separierelement (105, 205, 305) entlang einer Richtung parallel zur Oberfläche (102, 202) des Trägerelements (101), auf der das Partikelgemenge (103, 203, 303) angeordnet ist, bewegt wird; **dadurch gekennzeichnet, dass** am Separierelement (105, 205, 305) anhaftende Feinpartikel (104, 204, 304) mittels eines Reinigungselements (309) vom Separierelement (105, 205, 305) entfernt werden.

2. Verfahren nach Anspruch 1, **dadurch gekennzeichnet, dass** das Trägerelement (101) derart bewegt wird, dass sich das Partikelgemenge (103, 203, 303) wenigstens teilweise von der Oberfläche (102, 202) des Trägerelementes (101) löst.

3. Verfahren nach Anspruch 2, wobei das Bewegen des Trägerelements (101) ein Rütteln, Wippen und/oder Schwingen des Trägerelements (101) umfasst.

4. Verfahren nach einem der vorangegangenen Ansprüche, **dadurch gekennzeichnet, dass** das Separierelement (105, 205, 305) mittels einer Ladevorrichtung elektrostatisch aufgeladen wird.

5. PET-Recyclinganlage enthaltend eine Vorrichtung zum Aussortieren von Feinpartikeln (104, 204, 304) aus einem der PET-Recyclinganlage entstammenden Partikelgemenge (103, 203, 303), das Partikel unterschiedlicher Größen, insbesondere Feinpartikel mit einem Durchmesser bis 1 mm, umfasst, umfassend:
ein Trägerelement (101) zum Anordnen des Partikelgemenges (103, 203, 303) auf einer Oberfläche (102, 202) des Trägerelements (101); und
ein elektrostatisch geladenes Separierelement (105, 205, 305), das derart ausgebildet und/oder angeordnet ist, dass die Feinpartikel (104, 204, 304) mittels des elektrostatisch geladenen Separierelements (105, 205, 305) wenigstens teilweise aus dem Partikelgemenge (103, 203, 303) aussortiert werden können;
wobei das Separierelement (105, 205, 305) wenigstens teilweise über und/oder neben der Oberfläche (102, 202) des Trägerelements (101) zum Anordnen des Partikelgemenges (103, 203, 303) angeordnet ist;
wobei das Trägerelement (101) ein Fördermedium ist, sodass das Partikelgemenge (103, 203, 303) relativ zum Separierelement (105, 205, 305) entlang einer Richtung parallel zur Oberfläche (102, 202) des Trägerelements (101), auf der das Partikelgemenge (103, 203, 303) angeordnet ist, bewegbar ist; **dadurch gekennzeichnet, dass** die Vorrichtung außerdem ein Reinigungselement (309) zum Entfernen von am Separierelement (105, 205, 305) anhaftenden Feinpartikeln (104, 204, 304) umfasst.

6. Vorrichtung nach Anspruch 5, wobei das Trägerelement (101) derart bewegbar ist, dass sich durch die Bewegung ein auf der Oberfläche (102, 202) des Trägerelementes (101) angeordnetes Partikelgemenge (103, 203, 303) wenigstens teilweise von der Oberfläche (102, 202) löst.

7. Vorrichtung nach einem der Ansprüche 5 - 6, außerdem umfassend eine Ladevorrichtung zum elektrostatischen Aufladen des Separierelements (105, 205, 305).

8. Vorrichtung nach einem der Ansprüche 5 - 7, wobei das Separierelement (205, 305) eine Folie (206, 306) umfasst.

## Claims

1. Method for sorting out fine particles (104, 204, 304) from a particle mixture (103, 203, 303) of a PET recycling system, arranged on a surface (102, 202) of a support element (101), comprising particles of different sizes, in particular, fine particles with a diameter of up to 1 mm,
wherein the fine particles (104, 204, 304) are at least partially sorted out from the particle mixture (103, 203, 303) by means of an electrostatically charged separating element (105, 205, 305);
wherein the separating element (105, 205, 305) is located next to and/or above the particle mixture (103, 203, 303);
wherein the support element (101) is a conveyor medium such that the particle mixture (103, 203, 303) is moved relative to the separating element (105, 205, 305) along a direction parallel to the surface (102, 202) of the support element (101) on which the particle mixture (103, 203, 303) is arranged;
**characterized in that**
fine particles (104, 204, 304) adhering to the separating element (105, 205, 305) are removed from the separating element (105, 205, 305) using a cleaning element (309).

2. Method according to Claim 1, **characterised in that** the support element (101) is moved in such a way that the particle mixture (103, 203, 303) separates at least partially from the surface (102, 202) of the support element (101).

3. Method according to Claim 2, wherein the movement of the support element (101) comprises a shaking, teetering and / or oscillating of the support element (101).

4. Method according to one of the preceding claims, **characterised in that** the separating element (105, 205, 305) is electrostatically charged by means of a charging device.

5. PET recycling system comprising a device for sorting out fine particles (104, 204, 304) from a particle mixture (103, 203, 303) originating from the PET recycling system, which comprises particles of different sizes, in particular, fine particles with a diameter of up to 1 mm, comprising:
a support element (101) for arranging the particle mixture (103, 203, 303) on a surface (102, 202) of the support element (101); and
an electrostatically charged separating element (105, 205, 305) that is formed and / or arranged in such a way that the fine particles (104, 204, 304) can be at least partially sorted out from the particle mixture (103, 203, 303) by means of the electrostatically charged separating element (105, 205, 305);
wherein the separating element (105, 205, 305) is at least partially located next to and/or above the surface (102, 202) of the support element (101) for arranging the particle mixture (103, 203, 303);
wherein the support element (101) is a conveyor medium such that the particle mixture (103, 203, 303) is movable relative to the separating element (105, 205, 305) along a direction parallel to the surface (102, 202) of the support element (101) on which the particle mixture (103, 203, 303) is arranged;
**characterized in that**
the device further comprises a cleaning element (309) for removing fine particles (104, 204, 304) adhering to the separating element (105, 205, 305).

6. Device according to Claim 5, wherein the support element (101) is movable in such a way that a particle mixture (103, 203, 303) arranged on the surface (102, 202) of the support element (101) separates at least partially from the surface (102, 202) due to the movement.

7. Device according to one of the Claims 5 - 6, furthermore comprising a charging device for electrostatically charging the separating element (105, 205, 305).

8. Device according to one of the Claims 5 - 7, wherein the separating element (105, 205, 305) comprises a film (206, 306).

## Revendications

1. Procédé pour séparer par tri des particules fines (104, 204, 304) d'un amas de particules (103, 203, 303), qui est placé sur une surface (102, 202) d'un élément de support (101) dans une installation de recyclage de PET, et qui comprend des particules de différentes grosseur, notamment des particules fines avec un diamètre jusqu'à 1 mm, procédé
d'après lequel les particules fines (104, 204, 304) sont séparées par tri, au moins en partie, de l'amas de particules (103, 203, 303), au moyen d'un élément séparateur (105, 205, 305) à charge électrostatique ; d'après lequel l'élément séparateur (105, 205, 305) se trouve à côté et/ou au-dessus de l'amas de particules (103, 203, 303) ;
d'après lequel l'élément de support (101) est un moyen de transport, de sorte que l'amas de particules (103, 203, 303) est déplacé par rapport à l'élément séparateur (105, 205, 305), le long d'une direction parallèle à la surface (102, 202) de l'élément de support (101), sur laquelle est placé l'amas de particules (103, 203, 303) ;
**caractérisé en ce que** des particules fines (104, 204, 304), qui adhèrent à l'élément séparateur (105, 205, 305), sont évacuées, au moyen d'un élément de nettoyage (309), de l'élément séparateur (105, 205, 305).

2. Procédé selon la revendication 1, **caractérisé en ce que** l'élément de support (101) est mis en mouvement de manière telle, que l'amas de particules (103, 203, 303) se détache au moins partiellement de la surface (102, 202) de l'élément de support (101).

3. Procédé selon la revendication 2, d'après lequel le mouvement de déplacement de l'élément de support (101) comprend une agitation, un basculement et/ou une oscillation ou vibration de l'élément de support (101).

4. Procédé selon l'une des revendications précédentes, **caractérisé en ce que** l'on confère une charge électrostatique à l'élément séparateur (105, 205, 305), au moyen d'un dispositif de charge.

5. Installation de recyclage de PET renfermant un dispositif pour séparer par tri des particules fines (104, 204, 304) d'un amas de particules (103, 203, 303) en provenance de l'installation de recyclage de PET, et qui comprend des particules de différentes grosseur, notamment des particules fines avec un diamètre jusqu'à 1 mm, comprenant :
un élément de support (101) pour agencer l'amas de particules (103, 203, 303) sur une surface (102, 202) de l'élément de support (101) ; et
un élément séparateur (105, 205, 305) à charge électrostatique, qui est réalisé et/ou agencé de manière telle, que les particules fines (104, 204, 304) puissent être séparées par tri, au moins en partie, de l'amas de particules (103, 203, 303), au moyen de l'élément séparateur (105, 205, 305) à charge électrostatique ; installation
dans laquelle l'élément séparateur (105, 205, 305) est agencé au moins partiellement au-dessus et/ou à côté de la surface (102, 202) de l'élément de support (101) prévu pour y placer l'amas de particules (103, 203, 303) ;
et dans laquelle l'élément de support (101) est un moyen de transport, de sorte que l'amas de particules (103, 203, 303) peut être déplacé par rapport à l'élément séparateur (105, 205, 305), le long d'une direction parallèle à la surface (102, 202) de l'élément de support (101), sur laquelle est placé l'amas de particules (103, 203, 303) ;
**caractérisée en ce que** le dispositif comprend, en outre, un élément de nettoyage (309) pour évacuer des particules fines (104, 204, 304), qui adhèrent à l'élément séparateur (105, 205, 305).

6. Dispositif selon la revendication 5, dans lequel l'élément de support (101) peut être mis en mouvement de manière telle, qu'un amas de particules (103, 203, 303) placé sur la surface (102, 202) de l'élément de support (101), se détache au moins partiellement de la surface (102, 202) sous l'effet du mouvement.

7. Dispositif selon l'une des revendications 5 - 6, comprenant, en outre, un dispositif de charge pour conférer une charge électrostatique à l'élément séparateur (105, 205, 305).

8. Dispositif selon l'une des revendications 5 - 7, dans lequel l'élément séparateur (105, 205, 305) comporte une feuille (206, 306).
